# EUROPÄISCHE PATENTSCHRIFT

(11) **EP 2 960 742 B1**
(45) Veröffentlichungstag und Bekanntmachung des Hinweises auf die Patenterteilung: **06.10.2021**
(21) Anmeldenummer: 15170531.6
(22) Anmeldetag: 03.06.2015
(51) Int. Cl.: G05D 1/02

(54) **SIGNALVERARBEITUNGSVORRICHTUNG FÜR EINEN AUTONOMEN SERVICEROBOTER**
SIGNAL PROCESSING DEVICE FOR AN AUTONOMOUS SERVICE ROBOT
DISPOSITIF DE TRAITEMENT DE SIGNAL POUR UN ROBOT DE SERVICE AUTONOME

(30) Priorität: 27.06.2014 DE 102014212435
(43) Veröffentlichungstag der Anmeldung: 30.12.2015
(73) Patentinhaber: Robert Bosch GmbH, 70442 Stuttgart (DE)
(72) Erfinder: Eagling, Tom, Norfolk, NR16 2QF (GB); Fincham, Stephen, Coggeshall, Colchester, Essex, CO6 1NS (GB)

(56) Entgegenhaltungen:
- EP-A2- 2 412 221
- DE-A1- 2 613 930
- DE-A1- 2 946 559
- DE-A1- 3 335 776
- DE-A1-102011 084 793
- US-A- 5 429 203
- US-A1- 2009 149 202

## Beschreibung

### Stand der Technik

In der EP 2 412 221 A2 ist bereits ein autonomer Rasenmäher mit einer Signalverarbeitungsvorrichtung, mit zumindest einer Signalerfassungseinheit, die zu einer Erfassung von zumindest einem digitalen Empfangssignal vorgesehen ist, und mit zumindest einer Recheneinheit, die zu einer Verarbeitung des zumindest einen digitalen Empfangssignals vorgesehen ist, wobei das digitale Empfangssignal von einer Ladestation gesendet wird, wobei ein an die Ladestation angeschlossenes Begrenzungskabel einen geschlossenen Arbeitsbereich begrenzt und das digitale Empfangssignal überträgt, und wobei die Signalverarbeitungsvorrichtung dazu vorgesehen ist, mithilfe des digitalen Empfangssignals zu ermitteln, ob sie sich innerhalb des Arbeitsbereichs befindet, vorgeschlagen worden.

Aus der US 2009/0149202 A1 ist ein System und ein Verfahren zu einer Positionsbestimmung eines drahtlosen Geräts relativ zu einer Gruppe von in einem bestimmten Bereich verteilten anderen drahtlosen Geräten bekannt.

### Offenbarung der Erfindung

Die Erfindung geht aus von einem autonomen Rasenmäher mit einer Signalverarbeitungsvorrichtung, mit zumindest einer Signalerfassungseinheit, die zu einer Erfassung von zumindest einem digitalen Empfangssignal vorgesehen ist, und mit zumindest einer Recheneinheit, die zu einer Verarbeitung des zumindest einen digitalen Empfangssignals vorgesehen ist, wobei das digitale Empfangssignal von einer Ladestation gesendet wird, wobei ein an die Ladestation angeschlossenes Begrenzungskabel einen geschlossenen Arbeitsbereich begrenzt und das digitale Empfangssignal überträgt und wobei die Signalverarbeitungsvorrichtung dazu vorgesehen ist, mithilfe des digitalen Empfangssignals zu ermitteln, ob sie sich innerhalb des Arbeitsbereichs befindet.

Es wird vorgeschlagen, dass die zumindest eine Recheneinheit zumindest eine digitale Phasenregelschleife umfasst, die zu einer Phasenkopplung von zumindest einem Mustersignal an das zumindest eine digitale Empfangssignal vorgesehen ist, wobei die zumindest eine Recheneinheit dazu vorgesehen ist, einen Erfassungszeitpunkt des digitalen Empfangssignals in Abhängigkeit von einem Signalflankenzeitpunkt des digitalen Empfangssignals einzustellen und dazu vorgesehen ist, den Erfassungszeitpunkt in Abhängigkeit von dem Signalflankenzeitpunkt des digitalen Empfangssignals in Richtung einer Bitmitte eines zu erfassenden Bits des digitalen Empfangssignals zu verschieben. Dadurch kann das digitale Empfangssignal mit einer hohen Signalqualität mit einer einzigen Signalerfassung pro Bit erfasst werden. Dadurch kann die Signalerfassung vorteilhaft zu einem Zeitpunkt erfolgen, bei dem das digitale Empfangssignal besonders eindeutig erfassbar ist. Dadurch kann das zumindest eine digitale Empfangssignal mit einer besonders hohen Empfindlichkeit erfasst werden. In diesem Zusammenhang soll unter einem "autonomen Serviceroboter" insbesondere ein Gerät verstanden werden, welches eine Arbeit zumindest teilweise selbsttätig verrichtet, wie insbesondere selbsttätig beginnt, selbsttätig beendet und/oder selbsttätig zumindest einen Parameter, wie insbesondere einen Streckenparameter, und/oder einen Umkehrpunkt usw. auswählt. Vorzugsweise soll darunter ein Gerät verstanden werden, welches zumindest teilweise dazu vorgesehen ist, zumindest eine Tätigkeit für einen Bediener und/oder Menschen im Allgemeinen zu verrichten. Bevorzugt soll darunter insbesondere ein Gerät verstanden werden, das sich zumindest zur Verrichtung einer Arbeit selbsttätig bewegt, bzw. sich insbesondere autonom in einem vorgegebenen Arbeitsbereich fortbewegt. Besonders bevorzugt ist das Gerät dazu vorgesehen, einen Arbeitsbereich und insbesondere die Fläche zu bearbeiten, wie beispielsweise zu kehren, abzusaugen, zu reinigen und/oder einen auf der Fläche befindlichen Rasen zu mähen. Dabei sind verschiedene, dem Fachmann als sinnvoll erscheinende autonome Serviceroboter denkbar, wie insbesondere autonome Kehrmaschinen, autonome Staubsauger, autonome Schwimmbadreinigungsmaschinen, autonome Bodenwischroboter und/oder besonders bevorzugt autonome Rasenmäher. Grundsätzlich sind jedoch auch andere, dem Fachmann als sinnvoll erscheinende autonome Serviceroboter denkbar.

Unter einer "Signalerfassungseinheit" soll in diesem Zusammenhang insbesondere eine Einheit verstanden werden, die dazu vorgesehen ist, ein elektromagnetisches Signal zu erfassen. Unter einem "digitalen Empfangssignal" soll in diesem Zusammenhang insbesondere ein elektromagnetisches Signal verstanden werden, das zu einem Empfang durch die Signalverarbeitungsvorrichtung vorgesehen ist, und das eine digitale Information beinhaltet. Bevorzugt bildet das digitale Empfangssignal ein Binärsignal aus. Unter einem "Binärsignal" soll insbesondere ein Signal verstanden werden, das genau eine aus zwei verschiedenen Informationszuständen zusammengesetzte Information aufweist. Bevorzugt ist das digitale Empfangssignal als Pseudozufallssignal ausgebildet. Insbesondere soll unter einem "Pseudozufallssignal" ein Signal verstanden werden, das eine Autokorrelation mit einem Hauptmaximum aufweist, das wenigstens doppelt so groß ist, vorteilhaft wenigstens vier Mal so groß ist, wie gegebenenfalls vorhandene Nebenmaxima der Autokorrelation. Bevorzugt weist das Begrenzungssignal eine statistische Eigenschaft von weißem Rauschen auf. Vorteilhaft weist das Begrenzungssignal ein binäres Bitmuster auf. Insbesondere ist das Begrenzungssignal als ein dem Fachmann als sinnvoll erscheinendes Begrenzungssignals ausgebildet, vorzugsweise jedoch als eine JPL-Folge und/oder besonders bevorzugt als eine Gold-Folge.

Unter einer "Recheneinheit" soll insbesondere eine Einheit mit einem Informationseingang, einer Informationsverarbeitung und einer Informationsausgabe verstanden werden. Vorteilhaft weist die Recheneinheit zumindest einen Prozessor, einen Speicher, Ein- und Ausgabemittel, weitere elektrische Bauteile, ein Betriebsprogramm, Regelroutinen, Steuerroutinen und/oder Berechnungsroutinen auf. Vorzugsweise sind die Bauteile der Recheneinheit auf einer gemeinsamen Platine angeordnet und/oder vorteilhaft in einem gemeinsamen Gehäuse angeordnet. Unter einem "Mustersignal" soll in diesem Zusammenhang insbesondere eine Abfolge von Bits verstanden werden, die in zumindest einem Betriebszustand einem von dem zumindest einen digitalen Empfangssignal übertragenen Bitmuster gleicht. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Unter einem "Signalflankenzeitpunkt" soll in diesem Zusammenhang insbesondere ein Zeitpunkt einer Signalflanke verstanden werden. Unter einer "Bitmitte" soll in diesem Zusammenhang insbesondere ein zeitlicher Mittelpunkt eines zu übertragenden Bits verstanden werden. Ist das Bit von zwei Signalflanken begrenzt, so ist die Bitmitte auf einer Zeitachse von beiden Signalflanken gleich weit entfernt.

Des Weiteren wird vorgeschlagen, dass die Recheneinheit dazu vorgesehen ist, den Erfassungszeitpunkt vorzuziehen, wenn der Signalflankenzeitpunkt vor einem Signalflankenreferenzzeitpunkt liegt. Dadurch kann eine besonders effektive Anpassung des Erfassungszeitpunkts des digitalen Empfangssignals erreicht werden. Unter einem "Signalflankenreferenzzeitpunkt" soll in diesem Zusammenhang insbesondere ein theoretischer Sollzeitpunkt einer Signalflanke verstanden werden.

Weiterhin wird vorgeschlagen, dass die Recheneinheit dazu vorgesehen ist, den Erfassungszeitpunkt zu verzögern, wenn der Signalflankenzeitpunkt hinter einem Signalflankenreferenzzeitpunkt liegt. Dadurch kann ebenfalls eine besonders effektive Anpassung des Erfassungszeitpunkts des digitalen Empfangssignals erreicht werden.

Ferner wird vorgeschlagen, dass die zumindest eine Recheneinheit dazu vorgesehen ist, das zumindest eine digitale Empfangssignal durch eine Korrelation mit dem zumindest einen Mustersignal zu verifizieren. Dadurch kann vorteilhaft eine besonders schnelle Zuordnung des digitalen Empfangssignals erfolgen.

Des Weiteren wird ein autonomer Rasenmäher mit einer erfindungsgemäßen Signalverarbeitungsvorrichtung vorgeschlagen.

Weiterhin wird ein Verfahren zur Auswertung zumindest eines digitales Empfangssignals durch eine Signalverarbeitungsvorrichtung eines autonomen Rasenmähers vorgeschlagen, wobei das digitale Empfangssignal von einer Ladestation gesendet wird, wobei ein an die Ladestation angeschlossenes Begrenzungskabel einen geschlossenen Arbeitsbereich begrenzt und das digitale Empfangssignal überträgt, wobei die Signalverarbeitungsvorrichtung mithilfe des digitalen Empfangssignals (14) ermittelt, ob sie sich innerhalb des Arbeitsbereichs befindet.

Es wird vorgeschlagen, dass eine Phase eines Mustersignals an das zumindest eine digitale Empfangssignal mittels einer digitalen Phasenregelschleife gekoppelt wird, wobei ein Erfassungszeitpunkt des digitalen Empfangssignals in Abhängigkeit von einem Signalflankenzeitpunkt des digitalen Empfangssignals eingestellt wird, und wobei der Erfassungszeitpunkt mittels der Recheneinheit in Abhängigkeit von dem Signalflankenzeitpunkt des digitalen Empfangssignals in Richtung einer Bitmitte eines zu erfassenden Bits des digitalen Empfangssignals verschoben wird. Dadurch kann eine besonders genaue Erfassung des zumindest einen digitalen Empfangssignals erzielt werden. Dadurch kann eine besonders hohe Signalqualität des erfassten digitalen Empfangssignals mit nur einer Signalmessung pro Bit erreicht werden. Dadurch kann eine Signalmessung vorteilhaft in einem Bitbereich erfolgen, der einem Signalzustand besonders gut zuordenbar ist.

Ferner wird vorgeschlagen, dass der Erfassungszeitpunkt des digitalen Empfangssignals in Abhängigkeit von dem Signalflankenzeitpunkt des digitalen Empfangssignals durch eine zeitliche Verschiebung von mehr als einem Prozent einer Bitlängenzeit eingestellt wird. Dadurch kann eine besonders schnelle Anpassung des Signalflankenzeitpunkts an das digitale Empfangssignal erfolgen.

Die erfindungsgemäße Signalverarbeitungsvorrichtung soll hierbei nicht auf die oben beschriebene Anwendung und Ausführungsform beschränkt sein. Insbesondere kann die erfindungsgemäße Signalverarbeitungsvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen schematischen Aufbau einer erfindungsgemäßen Signalverarbeitungsvorrichtung,

- Fig. 2: ein Zeitdiagramm einer Erfassung eines digitalen Empfangssignals und
- Fig. 3: das Zeitdiagramm in einer Detailansicht.

### Beschreibung des Ausführungsbeispiels

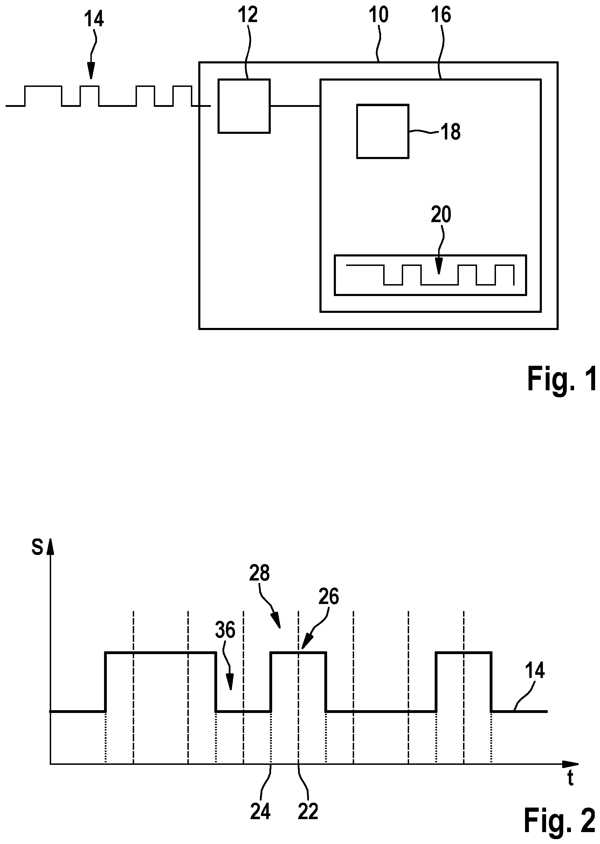

Die Figur 1 zeigt eine Signalverarbeitungsvorrichtung für einen autonomen Serviceroboter 10. Der autonome Serviceroboter 10 bildet einen autonomen Rasenmäher aus. Die Signalverarbeitungsvorrichtung ist zum Großteil innerhalb eines Gehäuses des autonomen Serviceroboters 10 angeordnet. Die Signalverarbeitungsvorrichtung weist eine Signalerfassungseinheit 12 auf. Die Signalerfassungseinheit 12 ist zu einer Erfassung von einem digitalen Empfangssignal 14 vorgesehen. Die Signalerfassungseinheit 12 bildet einen Sensor aus. Die Signalerfassungseinheit 12 weist zur Erfassung des digitalen Empfangssignals 14 eine nicht näher dargestellte Antenne auf. Das digitale Empfangssignal 14 wird von einer externen Station, wie insbesondere einer nicht näher gezeigten Ladestation gesendet. Das digitale Empfangssignal 14 bildet dabei ein Binärsignal aus. Ferner ist das digitale Empfangssignal 14 als Pseudozufallssignal ausgebildet. Eine sich wiederholende Bitfolge des digitalen Empfangssignals 14 ist somit bekannt. Ein an die Ladestation angeschlossenes Begrenzungskabel begrenzt einen geschlossenen Arbeitsbereich und überträgt das digitale Empfangssignal 14. Die Signalverarbeitungsvorrichtung ist dazu vorgesehen mithilfe des digitalen Empfangssignals 14 zu ermitteln, ob sie sich innerhalb des Arbeitsbereichs befindet.

Zur sicheren Erkennung ob es sich bei einem von der Signalerfassungseinheit 12 empfangenen Signal um das digitale Empfangssignal 14 handelt, wird das digitale Empfangssignal 14 verifiziert. Die Signalverarbeitungsvorrichtung umfasst hierzu eine Recheneinheit 16. Die Recheneinheit 16 ist zu einer Verarbeitung des digitalen Empfangssignals 14 vorgesehen. Genauer gesagt ist die Recheneinheit 16 dazu vorgesehen, das digitale Empfangssignal 14 durch eine Korrelation mit einem Mustersignal 20 zu verifizieren. Das Mustersignal 20 weist eine gleiche sich wiederholende Bitfolge auf, wie das digitale Empfangssignal 14. Die Bitfolge kann beispielhaft aus 62 Bits bestehen. Bei einer Korrelation des digitalen Empfangssignals 14 mit dem Mustersignal 20 werden 62 empfangene Bits des digitalen Empfangssignals 14 mit 62 Bits des Mustersignals 20 verglichen. Theoretisch müssten alle 62 Bits des digitalen Empfangssignals 14 mit den 62 Bits des Mustersignals 20 übereinstimmen. Aufgrund Übertragungsfehler und Empfangsstörungen können einzelne Bits fehlerhaft erfasst sein, was zu einer reduzierten Signalqualität führt. Daher verifiziert die Recheneinheit 16 das digitale Empfangssignal 14, sobald mehr als 54 Bits des digitalen Empfangssignals 14 mit den 62 Bits des Mustersignals 20 übereinstimmen.

Die Figur 2 zeigt ein Zeitdiagramm des digitalen Empfangssignals 14. Auf der x-Achse ist der Zeitverlauf "t" dargestellt. Auf der y-Achse ist eine Signalstärke "S" des digitalen Empfangssignals 14 dargestellt. Das digitale Empfangssignal 14 weist im zeitlichen Verlauf zwei verschiedene Zustände auf. Die Signalerfassungseinheit 12 erfasst das digitale Empfangssignal 14 jeweils einmal pro Bit. Ein Erfassungszeitpunkt 22 liegt dabei idealerweise in einer Bitmitte 26 eines Bits 28. Im Folgenden wird auf die Auswertung eines Signalzustands eines einzelnen Bits 28 Bezug genommen. Selbstverständlich lässt sich diese Auswertung auf alle anderen Bits analog anwenden.

Obwohl eine Abtastrate der Signalerfassungseinheit 12 auf eine Frequenz des digitalen Empfangssignals 14 eingestellt ist, können aufgrund von fehlerbehafteter Taktgeber, insbesondere von Quarzen, Phasenverschiebungen auftreten, was zu einer reduzierten Signalqualität führen kann. Um eine möglichst hohe Signalqualität zu erreichen, umfasst die Recheneinheit 16 eine digitale Phasenregelschleife 18. Die digitale Phasenregelschleife 18 ist zu einer Phasenkopplung des Mustersignals 20 an das digitale Empfangssignal 14 vorgesehen. Ebenso ist die digitale Phasenregelschleife 18 zu einer Phasenkopplung zwischen einem Erfassungszeitpunkt 22 und einer Frequenz des digitalen Empfangssignals 14 vorgesehen. In anderen Worten wird durch die Signalverarbeitungsvorrichtung eine Phase eines Mustersignals 20 an das digitale Empfangssignal 14 mittels der digitalen Phasenregelschleife 18 gekoppelt.

Um die Signalqualität zu erhöhen, ist die Recheneinheit 16 dazu vorgesehen, den Erfassungszeitpunkt 22 des digitalen Empfangssignals 14 in Abhängigkeit von einem Signalflankenzeitpunkt 24 des digitalen Empfangssignals 14 einzustellen. Genauer gesagt ist die Recheneinheit 16 dazu vorgesehen, den Erfassungszeitpunkt 22' in Abhängigkeit von dem Signalflankenzeitpunkt 24 des digitalen Empfangssignals 14 in Richtung der Bitmitte 26 des zu erfassenden Bits 28 des digitalen Empfangssignals 14 zu verschieben. In der Bitmitte 26 ist eine fehlerhafte Erfassung des Signalzustands des Bits 28 am unwahrscheinlichsten.

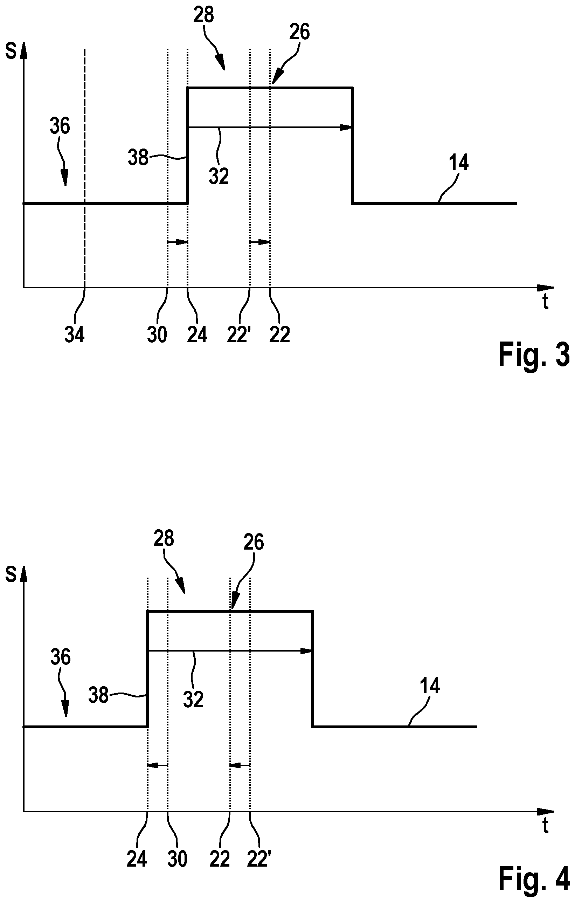

Die Recheneinheit 16 ermittelt nach jedem Erfassungsvorgang einen theoretischen nächsten Erfassungszeitpunkt 22' (Figur 3). Dazu zählt ein Zähler der Recheneinheit 16 zyklisch von Null bis zu einem festgelegten Wert. Der Wert wird in Abhängigkeit von einer Zählergeschwindigkeit und einer einzustellenden Abtastrate festgelegt. In diesem Beispiel beträgt der Wert 4000. Der Zähler zählt also zyklisch von 0 bis 4000. Ein Zyklus weist eine Dauer von einer Bitlängenzeit 32 auf. Der Zähler startet die Zählung bei einem Erfassungszeitpunkt 34 eines vorangehenden Bits 36 mit Null. Bei einem halben Zählerstand, in diesem Fall bei einem Zählerstand von 2000 legt die Recheneinheit 16 einen Signalflankenreferenzzeitpunkt 30 fest. Der Signalflankenreferenzzeitpunkt 30 entspricht einem Zeitpunkt an dem theoretisch eine Signalflanke 38 des digitalen Empfangssignals 14 erfolgen sollte.

In der Figur 3 ist ein Beispiel gezeigt, in dem die Signalflanke 38 zeitlich erst nach dem Signalflankenreferenzzeitpunkt 30 liegt. Die Recheneinheit 16 ist dazu vorgesehen, den Erfassungszeitpunkt 22 zu verzögern, wenn der Signalflankenzeitpunkt 24 hinter einem Signalflankenreferenzzeitpunkt 30 liegt. Dazu wird der Zählerstand im Signalflankenzeitpunkt 24 ausgelesen. Der Signalflankenzeitpunkt 24 liegt hinter dem Signalflankenreferenzzeitpunkt 30. Somit weist der Zählerstand einen Wert von mehr als 2000 auf. Die Recheneinheit 16 verzögert nun den Erfassungszeitpunkt 22. Die Verzögerung erfolgt um einen festgelegten Wert, der mindestens einem Prozent der Bitlängenzeit 32 entspricht. Die Verzögerung kann durch eine einmalige Reduzierung des Zählerstands und/oder durch eine Erhöhung eines Zählerendwerts erreicht werden. Somit wird der Erfassungszeitpunkt 22 in Abhängigkeit von dem Signalflankenzeitpunkt 24 des digitalen Empfangssignals 14 von einem ursprünglichen Erfassungszeitpunkt 22' ausgehend in Richtung der Bitmitte 26 des zu erfassenden Bits 28 des digitalen Empfangssignals 14 verschoben. Es ist in diesem Zusammenhang möglich, dass der Erfassungszeitpunkt 22 nicht vollständig bis zur Bitmitte 26 verschoben wird. In diesem Fall ist es wahrscheinlich, dass der Erfassungszeitpunkt 22 bei einem folgenden zu lesenden Bit weiter verzögert wird. Ebenso ist es denkbar, dass der Erfassungszeitpunkt 22 über die Bitmitte 26 hinaus verschoben wird. In diesem Fall ist es wahrscheinlich, dass der Erfassungszeitpunkt 22 bei einem folgenden zu lesenden Bit vorgezogen wird.

In der Figur 4 ist ein Beispiel gezeigt, in dem die Signalflanke 38 zeitlich bereits vor dem Signalflankenreferenzzeitpunkt 30 liegt. Die Recheneinheit 16 ist dazu vorgesehen, den Erfassungszeitpunkt 22 vorzuziehen, wenn der Signalflankenzeitpunkt 24 vor dem Signalflankenreferenzzeitpunkt 30 liegt. Dazu wird der Zählerstand im Signalflankenzeitpunkt 24 ausgelesen. Der Signalflankenzeitpunkt 24 liegt vor dem Signalflankenreferenzzeitpunkt 30. Somit weist der Zählerstand einen Wert von weniger als 2000 auf. Die Recheneinheit 16 zieht nun den Erfassungszeitpunkt 22 vor. Das zeitliche Vorziehen erfolgt um einen festgelegten Wert, der mindestens einem Prozent der Bitlängenzeit 32 entspricht. Das zeitliche Vorziehen kann durch eine einmalige Erhöhung des Zählerstands und/oder durch eine Reduzierung eines Zählerendwerts erreicht werden. Der Erfassungszeitpunkt 22 wird dadurch in Abhängigkeit von dem Signalflankenzeitpunkt 24 des digitalen Empfangssignals 14 von einem ursprünglichen Erfassungszeitpunkt 22' ausgehend in Richtung der Bitmitte 26 des zu erfassenden Bits 28 des digitalen Empfangssignals 14 verschoben. Es ist in diesem Zusammenhang möglich, dass der Erfassungszeitpunkt 22 nicht vollständig bis zur Bitmitte 26 verschoben wird. In diesem Fall ist es wahrscheinlich, dass der Erfassungszeitpunkt 22 bei einem folgenden zu lesenden Bit weiter vorgezogen wird. Ebenso ist es denkbar, dass der Erfassungszeitpunkt 22 über die Bitmitte 26 hinaus verschoben wird. In diesem Fall ist es wahrscheinlich, dass der Erfassungszeitpunkt 22 bei einem folgenden zu lesenden Bit verzögert wird.

## Patentansprüche

1. Autonomer Rasenmäher mit einer Signalverarbeitungsvorrichtung mit zumindest einer Signalerfassungseinheit (12), die zu einer Erfassung von zumindest einem digitalen Empfangssignal (14) vorgesehen ist, und mit zumindest einer Recheneinheit (16), die zu einer Verarbeitung des zumindest einen digitalen Empfangssignals (14) vorgesehen ist, wobei das digitale Empfangssignal (14) von einer Ladestation gesendet wird, wobei ein an die Ladestation angeschlossenes Begrenzungskabel einen geschlossenen Arbeitsbereich begrenzt und das digitale Empfangssignal (14) überträgt und wobei die Signalverarbeitungsvorrichtung dazu vorgesehen ist, mithilfe des digitalen Empfangssignals (14) zu ermitteln, ob sie sich innerhalb des Arbeitsbereichs befindet, **dadurch gekennzeichnet, dass** die zumindest eine Recheneinheit (16) zumindest eine digitale Phasenregelschleife (18) umfasst, die zu einer Phasenkopplung von zumindest einem Mustersignal (20) an das zumindest eine digitale Empfangssignal (14) vorgesehen ist, wobei die zumindest eine Recheneinheit (16) dazu vorgesehen ist, einen Erfassungszeitpunkt (22) des digitalen Empfangssignals (14) in Abhängigkeit von einem Signalflankenzeitpunkt (24) des digitalen Empfangssignals (14) einzustellen und dazu vorgesehen ist, den Erfassungszeitpunkt (22) in Abhängigkeit von dem Signalflankenzeitpunkt (24) des digitalen Empfangssignals (14) in Richtung einer Bitmitte (26) eines zu erfassenden Bits (28) des digitalen Empfangssignals (14) zu verschieben.

2. Autonomer Rasenmäher nach Anspruch 1, **dadurch gekennzeichnet, dass** die Recheneinheit (16) dazu vorgesehen ist, den Erfassungszeitpunkt (22) vorzuziehen, wenn der Signalflankenzeitpunkt (24) vor einem Signalflankenreferenzzeitpunkt (30) liegt.

3. Autonomer Rasenmäher nach Anspruch 1 oder 2, **dadurch gekennzeichnet, dass** die Recheneinheit (16) dazu vorgesehen ist, den Erfassungszeitpunkt (22) zu verzögern, wenn der Signalflankenzeitpunkt (24) hinter einem Signalflankenreferenzzeitpunkt (30) liegt.

4. Autonomer Rasenmäher nach einem der vorhergehenden Ansprüche, **dadurch gekennzeichnet, dass** die zumindest eine Recheneinheit (16) dazu vorgesehen ist, das zumindest eine digitale Empfangssignal (14) durch eine Korrelation mit dem zumindest einen Mustersignal (20) zu verifizieren.

5. Verfahren zur Auswertung zumindest eines digitales Empfangssignals (14) durch eine Signalverarbeitungsvorrichtung eines autonomen Rasenmähers, wobei das digitale Empfangssignal (14) von einer Ladestation gesendet wird, wobei ein an die Ladestation angeschlossenes Begrenzungskabel einen geschlossenen Arbeitsbereich begrenzt und das digitale Empfangssignal (14) überträgt und wobei die Signalverarbeitungsvorrichtung mithilfe des digitalen Empfangssignals (14) ermittelt, ob sie sich innerhalb des Arbeitsbereichs befindet, **dadurch gekennzeichnet, dass** eine Phase eines Mustersignals (20) an das zumindest eine digitale Empfangssignal (14) mittels einer digitalen Phasenregelschleife (18) gekoppelt wird, wobei ein Erfassungszeitpunkt (22) des digitalen Empfangssignals (14) in Abhängigkeit von einem Signalflankenzeitpunkt (24) des digitalen Empfangssignals (14) eingestellt wird, und wobei der Erfassungszeitpunkt (22) mittels der Recheneinheit (16) in Abhängigkeit von dem Signalflankenzeitpunkt (24) des digitalen Empfangssignals (14) in Richtung einer Bitmitte (26) eines zu erfassenden Bits (28) des digitalen Empfangssignals (14) verschoben wird.

6. Verfahren nach Anspruch 5, **dadurch gekennzeichnet, dass** der Erfassungszeitpunkt (22) des digitalen Empfangssignals (14) in Abhängigkeit von dem Signalflankenzeitpunkt (24) des digitalen Empfangssignals (14) durch eine zeitliche Verschiebung von mehr als einem Prozent einer Bitlängenzeit (32) eingestellt wird.

## Claims

1. Autonomous lawnmower having a signal processing apparatus with at least one signal capture unit (12) which is intended to capture at least one digital receive signal (14), and having at least one computing unit (16) which is intended to process the at least one digital receive signal (14), wherein the digital receive signal (14) is transmitted by a charging station, wherein a boundary cable connected to the charging station bounds a closed working area and transmits the digital receive signal (14), and wherein the signal processing apparatus is intended to determine, with the aid of the digital receive signal (14), whether it is within the working area, **characterized in that** the at least one computing unit (16) comprises at least one digital phase locked loop (18) which is intended to couple the phase of at least one pattern signal (20) to the at least one digital receive signal (14), wherein the at least one computing unit (16) is intended to set a capture time (22) of the digital receive signal (14) on the basis of a signal edge time (24) of the digital receive signal (14) and is intended to shift the capture time (22) in the direction of a centre (26) of a bit (28) to be captured of the digital receive signal (14) on the basis of the signal edge time (24) of the digital receive signal (14).

2. Autonomous lawnmower according to Claim 1, **characterized in that** the computing unit (16) is intended to bring the capture time (22) forward if the signal edge time (24) is before a signal edge reference time (30).

3. Autonomous lawnmower according to Claim 1 or 2, **characterized in that** the computing unit (16) is intended to delay the capture time (22) if the signal edge time (24) is after a signal edge reference time (30).

4. Autonomous lawnmower according to one of the preceding claims, **characterized in that** the at least one computing unit (16) is intended to verify the at least one digital receive signal (14) by means of a correlation with the at least one pattern signal (20).

5. Method for evaluating at least one digital receive signal (14) by means of a signal processing apparatus of an autonomous lawnmower, wherein the digital receive signal (14) is transmitted by a charging station, wherein a boundary cable connected to the charging station bounds a closed working area and transmits the digital receive signal (14), and wherein the signal processing apparatus determines, with the aid of the digital receive signal (14), whether it is within the working area, **characterized in that** a phase of a pattern signal (20) is coupled to the at least one digital receive signal (14) by means of a digital phase locked loop (18), wherein a capture time (22) of the digital receive signal (14) is set on the basis of a signal edge time (24) of the digital receive signal (14), and wherein the capture time (22) is shifted, by means of the computing unit (16), in the direction of a centre (26) of a bit (28) to be captured of the digital receive signal (14) on the basis of the signal edge time (24) of the digital receive signal (14) .

6. Method according to Claim 5, **characterized in that** the capture time (22) of the digital receive signal (14) is set on the basis of the signal edge time (24) of the digital receive signal (14) by means of a temporal shift of more than one per cent of a bit length time (32).

## Revendications

1. Tondeuse à gazon autonome comprenant un dispositif de traitement de signal pourvu d'au moins une unité d'acquisition de signal (12), qui est prévue pour acquérir au moins un signal de réception numérique (14), et d'au moins une unité de calcul (16) qui est prévue pour traiter l'au moins un signal de réception numérique (14), le signal de réception numérique (14) étant envoyé par une station de charge, un câble de délimitation relié à la station de charge délimitant une zone de travail fermée et transmettant le signal de réception numérique (14) et le dispositif de traitement de signal étant prévu pour déterminer à l'aide du signal de réception numérique (14) s'il est situé dans la zone de travail, **caractérisé en ce que** l'au moins une unité de calcul (16) comprend au moins une boucle de régulation de phase numérique (18) qui est prévue pour le couplage de phase d'au moins un signal de motif (20) à l'au moins un signal de réception numérique (14), l'au moins une unité de calcul (16) étant prévue pour régler un instant d'acquisition (22) du signal de réception numérique (14) en fonction d'un instant de front de signal (24) du signal de réception numérique (14) et étant prévue pour décaler l'instant d'acquisition (22) en fonction de l'instant de front de signal (24) du signal de réception numérique (14) en direction d'un centre de bit (26) d'un bit à détecter (28) du signal de réception numérique (14).

2. Tondeuse à gazon autonome selon la revendication 1, **caractérisée en ce que** l'unité de calcul (16) est prévue pour avancer l'instant d'acquisition (22) si l'instant de front de signal (24) est antérieur à un instant de référence de front de signal (30).

3. Tondeuse à gazon autonome selon la revendication 1 ou 2, **caractérisée en ce que** l'unité de calcul (16) est prévue pour retarder l'instant d'acquisition (22) si l'instant de front de signal (24) est en retard sur un instant de référence de front de signal (30).

4. Tondeuse à gazon autonome selon l'une des revendications précédentes, **caractérisée en ce que** l'au moins une unité de calcul (16) est prévue pour vérifier l'au moins un signal de réception numérique (14) par corrélation avec l'au moins un signal de motif (20).

5. Procédé d'évaluation d'au moins un signal de réception numérique (14) à l'aide d'un dispositif de traitement de signal d'une tondeuse à gazon autonome, le signal de réception numérique (14) étant envoyé par une station de charge, un câble de délimitation relié à la station de charge délimitant une zone de travail fermée et transmettant le signal de réception numérique (14) et le dispositif de traitement de signal déterminant à l'aide du signal de réception numérique (14) s'il est situé dans la zone de travail, **caractérisé en ce qu'**une phase d'un signal de motif (20) est couplée à l'au moins un signal de réception numérique (14) au moyen d'une boucle de régulation de phase numérique (18), un instant d'acquisition (22) du signal de réception numérique (14) étant réglé en fonction d'un instant de front de signal (24) du signal de réception numérique (14), et l'instant d'acquisition (22) étant décalé au moyen de l'unité de calcul (16) en direction d'un centre de bit (26) d'un bit (28) à acquérir du signal de réception numérique (14) en fonction de l'instant de front de signal (24) du signal de réception numérique (14).

6. Procédé selon la revendication 5, **caractérisé en ce que** l'instant d'acquisition (22) du signal de réception numérique (14) est réglé en fonction de l'instant de front (24) du signal de réception numérique (14) par un décalage temporel de plus d'un pour cent d'un temps de longueur de bit (32).
